# EUROPÄISCHE PATENTANMELDUNG

(11) **EP 0 937 402 A1**
(43) Veröffentlichungstag der Anmeldung: **25.08.1999**
(21) Anmeldenummer: 99102933.1
(22) Anmeldetag: 13.02.1999
(51) Int. Cl.: A21D 13/00, A21D 13/08, A23L 1/01, A23L 1/227

(54) **Wirkstoffkomposition zur Intensivierung der Bräunung und des Aromas von Gebäck**

(30) Priorität: 17.02.1998 DE 19806514
(71) Anmelder: Boehringer Backmittel GmbH & Co. KG, 55411 Bingen (DE)
(72) Erfinder: Russ, Gerhard, 55578 Wallertheim (DE); Scharf, Udo, Dr., 55413 Weiler (DE); Wendler, Wolfram, 55595 Münchwald (DE); Wintoch, Herbert, Dr., 40764 Langenfeld (DE)

(57) **Zusammenfassung**

Die vorliegende Erfindung betrifft eine neuartige Wirkstoffkomposition zur Intensivierung der Bräunung und des Aromas von Gebäck, die insbesondere zum Aufsprühen auf vorgebackenes Gebäck jedweder Art vorgesehen ist.

## Beschreibung

Die vorliegende Erfindung betrifft eine neuartige Wirkstoffkomposition Zur Intensivierung der Bräunung und des Aromas von Gebäck, die insbesondere zum Aufsprühen auf ungebackenes oder vorgebackenes Gebäck jedweder Art geeignet ist.

Vorgebackene Backwaren sind ungefähr seit den 50er Jahren aus dem Stand der Technik bekannt. Bei diesem Verfahren wird bei einer etwas festeren Teigführung das Gebäck bei Temperaturen von 135 bis 150 °C oder bei üblichen Anfangstemperturen (ca. 240°C) mit rasch sinkenden Temperaturen solange gebacken, bis es in der Krume genügend stabil geworden ist. Unmittelbar vor der Bräunung wird der Backvorgang abgebrochen und das Gebäck - worunter insbesondere Brötchen oder Baguettes zu verstehen sind - wird in Frischhaltepackungen verpackt und in dieser Form dem Kunden zum Kauf angeboten, der dann das Fertigbacken unmittelbar vor dem Verzehr vornimmt [J.M. Brümmer und H. Neumann, Getreide, Mehl und Brot, 48 (1994) 59]. Nach einer Zeitspanne von 7 bis ca. 10 Minuten bei einer Temperatur von ca. 230 °C ist dann das Fertigbacken meistens abgeschlossen und das Gebäck ist für den Verzehr geeignet.

Allerdings konnten sich derartige Produkte damals - insbesondere am europäischen bzw. deutschen Markt - nicht durchsetzen, wofür in erster Linie - trotz des Einsatzes von Konservierungsstoffen - die begrenzte Haltbarkeit dieser Produkte verantwortlich war. Daneben stellt jedoch der Verbraucher auch bestimmte Forderungen bezüglich der sensorischen Eigenschaften an diese Backwaren, die bislang nicht in befriedigendem Maße von diesen erfüllt werden konnten. Hierbei spielt naturgemäß das Aroma und das Aussehen des Gebäcks eine entscheidende Rolle. Zum einen wirkt der Duft eines frischen Brötchens appetitanregend - zum anderen ißt das Auge bekanntlich mit.

Hieraus resultiert primär die Aufgabenstellung der vorliegenden Erfindung:

Eine wesentliche Aufgabe der vorliegenden Erfindung besteht somit darin, neue Substanzkompositionen zur Verfügung zu stellen, die auf vorgebackenem Gebäck aufgesprüht werden kann und die dazu befähigt ist, das optische Erscheinungsbild (Bräunung) der Kruste zu verbesssern und die Aromaeigenschaften des fertig gebackenen Gebäcks zu intensivieren.

Eine weitere Aufgabe der vorliegenden Erfindung besteht darin, eine Substanzkomposition aufzufinden, die auf der anderen Seite andere Eigenschaften - wie Rösche, Geschmack und Aussehen (Glanz) - nicht nachteilig beeinflußt. Daneben darf die angestrebte Komposition auf keinen Fall die mikrobiologische Haltbarkeit der vorgebackenen Backware beeinträchtigen.

Zusammensetzungen, die zur Intensivierung des Aromas von Nahrungsmitteln beitragen, sind aus dem Stand der Technik bekannt. So beschreibt die EP 175 871 eine Wirkstoffkomposition, mit der der Geschmack und das Aroma von Kompositionen mit einem Zitrusfruchtgeschmack intensiviert bzw. modifiziert werden kann.

Daneben offenbart die US-Patentschrift 5 045 335 eine wässerige Zusammensetzung, mit welcher die Aromacharakteristika von Nahrungsmitteln auf der Basis von Kartoffeln - wie beispielsweise Pommes Frites - verbessert werden können.

Allerdings sind dem Stand der Technik keine Lösungsansätze für die eingangs genannte Aufgabenstellung zu entnehmen. Gelöst wird die erfindungsgemäße Aufgabenstellung durch eine wässrige Lösung, die zum Aufsprühen auf vorgebackene Gebäcke geeignet ist und die im wesentlichenfolgende Bestandteile enthält:
- Ascorbinsäure und/oder ihre Salze in einem Anteil von 5 bis 70, vorzugsweise 10 bis 30 und besonders bevorzugt 11 bis 15 Gew.-%;
- Aminosäuren - wie zum Beispiel Cystein, Prolin und/oder Lysin - in isolierter Form und/oder in Form von Proteinhydrolysaten - wie zum Beispiel Milchproteinhydrolysaten - in einem Anteil von 0.2 bis 50, vorzugsweise 0.5 bis 15 und besonders bevorzugt 1 bis 4 Gew.-% - im Falle eine oder mehrere Aminosäuren eingesetzt werden - oder 5 bis 70, vorzugsweise 5 bis 50 und besonders bevorzugt 10 bis 40 Gew.-% wenn Proteinhydrolysate zum Einsatz kommen;
- Röstmalzextrakte oder C₅-Kohlenhydrate bzw. Pentosen - beispielsweise Arabinose, Xylose oder vorzugsweise D-(-)-Ribose - in einem Anteil von 0.5 - 20, vorzugsweise 1 bis 15 und besonders bevorzugt 2 bis 8 Gew.-%;
- Phosphate bzw. Di- und/oder Oligo-Phosphate in einem Anteil von 0.01 bis 50, bevorzugt 1 bis 30 und besonders bevorzugt 8 bis 15 Gew.-%;
- gegebenenfalls Milchsäure bzw. deren Salze in einem Anteil von 1 bis 30 und besonders bevorzugt 5 bis 10 Gew.-% und
- gegebenenfalls Zuckerstoffe - beispielsweise in Form käuflich erhältlicher Dextroseäquivalente - und/oder Maltodextrin, Saccharose, Fructose, Glucose oder Laktose in einem Anteil von vorzugsweise 10 bis 74 und besonders bevorzugt 20 bis 50 Gew.-%.

Alle oben aufgeführten Substanzen können auch in Form von zusammengesetzten Rohstoffen bzw. Lebensmitteln, welche die genannte Stoffe enthalten, eingesetzt werden - z.B. Acerolakirsche (Saft oder Pulver), Molken-bzw. Proteinhydrolysat, Hefeextrakt, (Getreide-)Ballaststsoffe, Karamelzucker, Röststoffe aus Malz oder ähnlichen Stoffen oder deren Extrakte. Hierzu können auch Enzyme - wie z.B. Pentosanasen, Proteasen o.ä. -, die die Freisetzung der benötigten Substanz aus dem eingesetzten Rohstoff fördern - beigefügt werden.

Die erfindungsgemäße Komposition kann in Form eines wasserlöslichen Pulvers, das kurz vor der Anwendung in Wasser gelöst wird, zur Verügung gestellt werden wie auch als fertige Lösung. Die gebrauchsfertige Lösung kann durch Sprühen, Tauchen oder Pinseln auf die Oberfläche des vor- bzw. ungebackenen Gebäcks aufgebracht werden.

Die eingangs genannten Aufgaben werden durch die in den folgenden Beispielen beschriebenen Kompositionen gelöst. Verschiedenartige andere Ausgestaltungen werden für den Fachmann aus der vorliegenden Beschreibung und den Beispielen ersichtlich. Es wird jedoch ausdrücklich darauf hingewiesen, daß die Beispiele und die diesen zugeordnete Beschreibung lediglich zum Zweck der Erläuterung und Beschreibung vorgesehen und nicht als Einschränkung der Erfindung anzusehen sind.

Im ersten Teil der Beispiele werden einige der erfindungsgemäßen Kompositionen, die zur Lösung der eingangs beschriebenen Aufgabenstellung geeignet sind, beschrieben. Die im zweiten Teil beschriebenen Backversuche belegen die Vorteilhaftigkeit der erfindungsgemäßen Kompositionen bei der Lösung der der Erfindung zugrundeliegenden Aufgabe.

### Beispiele:

### I. Kompositionen:

### Beispiel 1:

| | |
|---|---|
| Tetra-Natrium-Pyrophosphat | 8 % |
| Ascorbinsäure bzw. deren Salze | 11 % |
| L-Cystein HCl | 4 % |
| Ribose | 4 % |
| Saccharose | 44 % |
| Maltodextrin | 30 % |

### Beispiel 2:

| | |
|---|---|
| Tetra-Natrium-Pyrophosphat | 10 % |
| Ascorbinsäure bzw. deren Salze | 15 % |
| L-Cystein HCl | 1 % |
| Röstmalzextrakt | 3 % |
| Saccharose | 40 % |
| Maltodextrin | 31 % |

### Beispiel 3:

| | |
|---|---|
| Tetra-Natrium-Pyrophosphat | 10 % |
| Ascorbinsäure bzw. deren Salze | 15 % |
| Süßmolkenpulver | 30 % |
| Protease | 3 % |
| Ribose | 5 % |
| Saccharose | 38 % |

### Beispiel 4:

| | |
|---|---|
| Tetra-Natrium-Pyrophosphat | 10 % |
| Ascorbinsäure bzw. deren Salze | 15 % |
| Süßmolkenpulver | 30 % |
| Protease | 3 % |
| Röstmalzextrakt | 3 % |
| Saccharose | 20 % |
| Maltodextrin | 20 % |

### Beispiel 5:

| | |
|---|---|
| Tetra-Natrium-Pyrophosphat | 10 % |
| L-Ascorbinsäure | 15 % |
| L-Cystein | 5 % |
| Weizenpentosan | 20 % |
| Röstmalzextrakt | 2 % |
| Saccharose | 24 % |
| Maltodextrin | 24 % |

### Beispiel 6:

| | |
|---|---|
| Tetra-Natrium-Pyrophosphat | 10 % |
| L-Ascorbinsäure | 15 % |
| Süßmolkenpulver | 30 % |
| Protease | 3 % |
| Weizenpentosan | 20 % |
| Pentosanase | 2 % |
| Saccharose | 20 % |

### Beispiel 7:

| | |
|---|---|
| Tetra-Natrium-Pyrophosphat | 10 % |
| Ascorbinsäure bzw. deren Salze | 15 % |
| Natrium-/ Calciumlactat | 10 % |
| Süßmolkenpulver | 30 % |
| Protease | 3 % |
| Saccharose | 42 % |

### Beispiel 8:

| | |
|---|---|
| Tetra-Natrium-Pyrophosphat | 15 % |
| Ascorbinsäure bzw. deren Salze | 15 % |
| Natrium-/ Calciumlactat | 5 % |
| Süßmolkenpulver | 30 % |
| Protease | 3 % |
| Saccharose | 32 % |

### Beispiel 9:

| | |
|---|---|
| Tetra-Natrium-Pyrophosphat | 15 % |
| Ascorbinsäure bzw. deren Salze | 15 % |
| Natrium-/ Calciumlactat | 5 % |
| Süßmolkenpulver | 30 % |
| Protease | 3 % |
| Maltodextrin | 32 % |

### II. Backversuche:

Mit den Beispielen Nummer 1 und Nummer 4 wurde ein Beispiel-Backversuch durchgeführt. Es wurden Schnittbrötchen nach folgender Rezeptur gebacken:

| | | |
|---|---|---|
| Weizenmehl (handelsüblich) | 100 % | 4000 g |
| Wasser | 59 % | 2360 g |
| Hefe | 4 % | 160 g |
| Backmittel (speziell f. Halbgebackene) | 4 % | 160 g |
| Kochsalz | 2 % | 80 g |
| Backmargarine | 1 % | 40 g |
| Teigeinwaage f.30 Stück | 1650 g | |
| Ballengare | 15 min. | |
| Stückgare | 35 min. bei | |
| rel. Luftfeuchte: | 85 % | |
| Lufttemperatur: | 27°C | |

Die Brötchen wurden nach dem Rundwirken maschinell langgewirkt und vor dem ersten Backen längs geschnitten.

| | | |
|---|---|---|
| Backzeit 1 | 11 min. | |
| Backtemperatur | 240°C - 200°C | fallend |
| Backzeit 2 | 10 min. | |
| Backtemperatur | 240°C | durchgehend |

Vor der zweiten Backphase wuren die Brötchen des Backmusters Nr. 1 mit Wasser, Backmuster 2 mit Lösung Nr. 1 und Backmuster Nr. 3 mit Lösung Nr. 4 besprüht.

Von einer Gruppe von 4 Backmeistern wurden die Backmuster Nr. 2 und 3 als deutlich aromatischer und röstiger im Geruch als Nummer 1 bezeichnet.

Der vorteilhafte Einfluß der erfindungsgemäßen Wirkstoffkomposition wird daneben insbesondere in der intensiveren Färbung der Backwaren sichtbar.

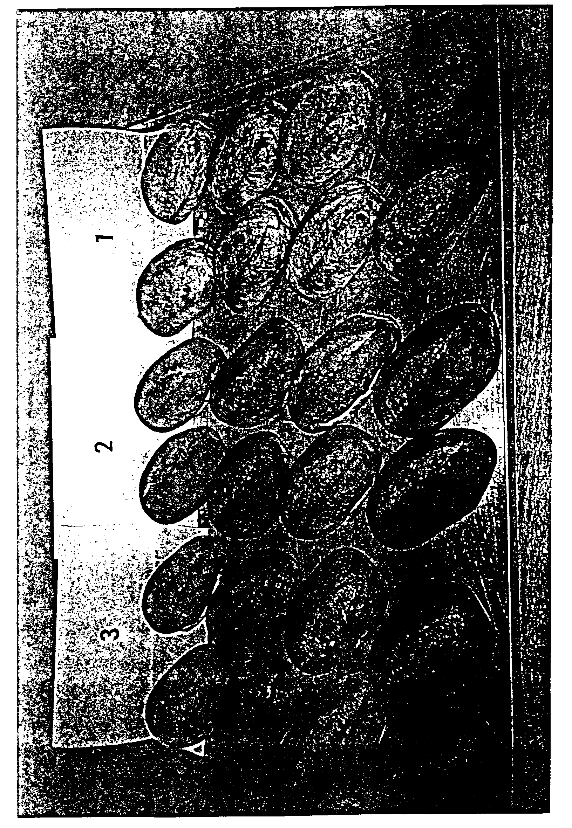

Figur 1 zeigt im Vergleich nebeneinander die nach dem oben angegebenen Verfahren hergestellten Brötchen. Dabei ist deutlich erkennbar, daß diejenigen Brötchen (1), die lediglich mit Wasser besprüht worden waren, eine wesentlich blassere Bräunung aufweisen, als diejenigen Backmuster, die mit einer Lösung gemäß Beispiel 1 (2) bzw. gemäß Beispiel 4 (3) besprüht worden waren.

## Patentansprüche

1. Wirkstoffkomposition zur Intensivierung der Bräunung und des Aromas von Gebäck, dadurch gekennzeichnet, daß sie jeweils mindestens einen Bestandteil aus den Gruppen Ascorbinsäure und/oder ihre Salze, eine oder mehrere Aminosäure(n) in isolierter Form oder in Form eines Proteinhydrolysats, ein oder mehrere C₅-Kohlenhydrat(e) in isolierter Form oder ein Röstmalzextrakt, ein oder mehrere Phosphate oder Oligophophate und gegebenenfalls Milchsäure und/oder ihre Salze sowie Zuckerstoffe in fester form oder in Form einer wässrigen Lösung enthält.

2. Wirkstoff komposition nach Anspruch 1, daduech gekennzeichnet, daß die Aminosäure aus der Gruppe Cystein, Prolein oder Lysin ausgewählt ist.

3. Wirkstoffkomposition nach Anspruch 1, dadurch gekennzeichnet, daß das Proteinhydrolysat ein Milchproteinhydrolysat ist.

4. Wirkstoffkomposition nach Anspruch 1, dadurch gekennzeichnet, daß das C₅-Kohlenhydrat aus der Gruppe Arabinose, Xylose oder Ribose ausgewählt ist.

5. Wirkstoffkomposition nach Anspruch 1, dadurch gekennzeichnet, daß der Zuckerstoff aus der Gruppe Maltodextrin, Saccharose, Fructose, Glucose oder Laktose ausgewählt ist.

6. Wirkstoffkomposition nach Anspruch 1, dadurch gekennzeichnet, daß der Zuckerstoff ein käuflich erhältliches Dextroseäquivalent ist.

7. Wirkstoffkomposition nach Anspruch 1, dadurch gekennzeichnet, daß der Gehalt an Ascorbinsäure und ihren Salzen in einem Bereich von 5 bis 70 Gew.-% liegt.

8. Wirkstoffkomposition nach Anspruch 7, dadurch gekennzeichnet, daß der Gehalt an Ascorbinsäure und ihren Salzen in einem Bereich von 10 bis 30 Gew.-% liegt.

9. Wirkstoffkomposition nach Anspruch 8, dadurch gekennzeichnet, daß der Gehalt an Ascorbinsäure und ihren Salzen in einem Bereich von 11 bis 15 Gew.-% liegt.

10. Wirkstoffkomposition nach Anspruch 1 oder 2, dadurch gekennzeichnet, daß der Gehalt an Aminosäuren in einem Bereich von 0.2 bis 50 Gew.-% liegt.

11. Wirkstoffkomposition nach Anspruch 10, dadurch gekennzeichnet, daß der Gehalt an Aminosäuren in einem Bereich von 0.5 bis 15 Gew.-% liegt.

12. Wirkstoffkomposition nach Anspruch 11, dadurch gekennzeichnet, daß der Gehalt an Aminosäuren in einem Bereich von 1 bis 4 Gew.-% liegt.

13. Wirkstoffkomposition nach Anspruch 1 oder 3, dadurch gekennzeichnet, daß der Gehalt an Proteinhydrolysaten in einem Bereich von 5 bis 70 Gew.-% liegt.

14. Wirkstoffkomposition nach Anspruch 13, dadurch gekennzeichnet, daß der Gehalt an Proteinhydrolysaten in einem Bereich von 5 bis 50 Gew.-% liegt.

15. Wirkstoffkomposition nach Anspruch 14, dadurch gekennzeichnet, daß der Gehalt an Proteinhydrolysaten in einem Bereich von 10 bis 40 Gew.-% liegt.

16. Wirkstoffkomposition nach Anspruch 1 oder 4, dadurch gekennzeichnet, daß der Gehalt an Röstmalzextrakten oder C₅-Kohlenhydraten in einem Bereich von 0.5 bis 20 Gew.-% liegt.

17. Wirkstoffkomposition nach Anspruch 16, dadurch gekennzeichnet, daß der Gehalt an Röstmalzextrakten oder C₅-Kohlenhydraten in einem Bereich von 1 bis 15 Gew.-% liegt.

18. Wirkstoffkomposition nach Anspruch 17, dadurch gekennzeichnet, daß der Gehalt an Röstmalzextrakten oder C₅-Kohlenhydraten in einem Bereich von 2 bis 8 Gew.-% liegt

19. Wirkstoffkomposition nach Anspruch 1, dadurch gekennzeichnet, daß der Gehalt an Phosphaten in einem Bereich von 0.01 bis 50 Gew.-% liegt.

20. Wirkstoffkomposition nach Anspruch 19, dadurch gekennzeichnet, daß der Gehalt an Phosphaten in einem Bereich von 1 bis 30 Gew.-% liegt.

21. Wirkstoffkomposition nach Anspruch 20, dadurch gekennzeichnet, daß der Gehalt an Phosphaten in einem Bereich von 8 bis 15 Gew.-% liegt.

22. Wirkstoffkomposition nach Anspruch 1, dadurch gekennzeichnet, daß der Gehalt an Milchsäure oder Salzen der Milchsäure in einem Bereich von 2 bis 30 Gew.-% liegt.

23. Wirkstoffkomposition nach Anspruch 22, dadurch gekennzeichnet, daß der Gehalt an Milchsäure oder Salzen der Milchsäure in einem Bereich von 5 bis 10 Gew.-% liegt.

24. Wirkstoffkomposition nach einem der Ansprüche 1, 4, 5, oder 6, dadurch gekennzeichnet, daß der Gehalt an Zuckerstoffen oder Dextroseäquivalenten in einem Bereich von 10 bis 74 Gew.-% liegt.

25. Wirkstoffkomposition nach Anspruch 24, dadurch gekennzeichnet, daß der Gehalt an Zuckerstoffen oder Dextroseäquivalenten in einem Bereich von 20 bis 50 Gew.-% liegt.

26. Verfahren zur Herstellung der Wirkstoffkombination nach einem der Ansprüche 1 bis 25, dadurch gekennzeichnet, daß man die einzelnen Bestandteile nach an sich aus dem Stand der Technik bekannten Verfahren mischt und gegebenenfalls in Wasser löst.

27. Verwendung der Wirkstoffkomposition nach einem der Ansprüche 1 bis 25 zur Herstellung von Gebäck.
